# EUROPÄISCHE PATENTSCHRIFT

(11) **EP 4 466 486 B1**
(45) Veröffentlichungstag und Bekanntmachung des Hinweises auf die Patenterteilung: **19.11.2025**
(21) Anmeldenummer: 23701622.5
(22) Anmeldetag: 11.01.2023
(51) Int. Cl.: F17C 13/02, G01K 1/143, G01K 1/18, G01K 13/02

(54) **KRYOGENVERSORGUNGSSYSTEM**
CRYOGENIC SUPPLY SYSTEM
SYSTÈME D'ALIMENTATION EN CRYOGÈNE

(30) Priorität: 20.01.2022 EP 22020018
(43) Veröffentlichungstag der Anmeldung: 27.11.2024
(73) Patentinhaber: Linde GmbH, 82049 Pullach (DE)
(72) Erfinder: WELLENHOFER, Anton, 82049 Pullach (DE); MÜLLER, Eva, 82049 Pullach (DE); FELBINGER, Stefan, 82049 Pullach (DE); WOLFERSTETTER, Clemens, 82049 Pullach (DE); ZACH, Christian, 82049 Pullach (DE); ZENZ, Harald, 82049 Pullach (DE); WELLENHOFER, Kathrin, 82049 Pullach (DE); HAKEMI, Nabeel, 82049 Pullach (DE); TONEVA, Petya, 82049 Pullach (DE); SCHAFRANEK, Johannes, 82049 Pullach (DE)
(74) Vertreter: Meilinger, Claudia Sabine
(86) Internationale Anmeldenummer: PCT/EP2023/025006
(87) Internationale Veröffentlichungsnummer: WO 2023/138896

(56) Entgegenhaltungen:
- EP-A1- 3 070 444
- CN-B- 101 403 640
- KR-A- 20040 032 168
- KR-B1- 100 986 704
- US-A1- 2016 003 685
- US-A1- 2020 096 394

## Beschreibung

Die Erfindung betrifft ein Kryogenversorgungssystem zum Versorgen eines Verbrauchers mit einem Kryogen.

Im kryogenen Betrieb von verflüssigten Medien ist es oftmals erforderlich, eine Prozesstemperatur eines jeweiligen Mediums, insbesondere eines Kryogens, in Behältern oder Rohren zu erfassen. Diese Temperaturmessung kann gemäß betriebsinternen Erkenntnissen mit Hilfe eines direkt mit einem Prozessrohr mechanisch und thermisch verbundenen Temperaturaufnehmers erfolgen. Direkte Messungen sind, speziell bei höheren Drücken, schwer zu realisieren. Ist nun das Prozessrohr mit druckdichten Isolierrohren zur guten Wärmeisolation ummantelt, ist es aus sicherheitstechnischer und aus betriebstechnischer Sicht unerwünscht, die Isolierrohre mit Durchführungen für eine Verkabelung oder für den Temperaturaufnehmer zu durchbrechen. Das Durchbrechen der Isolierrohre kann zu einem Verlust eines in dem jeweiligen Isolierrohr herrschenden Vakuums führen. Dies wiederum kann zu einem Verlust der Isolierwirkung und zu einem Ausfall des betroffenen Bereichs führen. Die Lecksuche und die Reparatur eines solche Systems sind arbeitsaufwändig und zeitaufwändig. Dies gilt es zu verbessern. EP3070444A1 offenbart eine Oberflächentemperaturmesseinrichtung.

Vor diesem Hintergrund besteht die Aufgabe der vorliegenden Erfindung darin, ein verbessertes Kryogenversorgungssystem zur Verfügung zu stellen.

Demgemäß wird ein Kryogenversorgungssystem zum Versorgen eines Verbrauchers mit einem Kroygen vorgeschlagen. Das Kryogenversorgungssystem umfasst ein Prozessrohr, durch welches das Kryogen hindurchleitbar ist, eine Schutzbarriere, in der das Prozessrohr aufgenommen ist, einen Spalt, der zwischen dem Prozessrohr und der Schutzbarriere vorgesehen ist, eine in dem Spalt angeordnete Wärmeleiteinrichtung, die dazu eingerichtet ist, Wärme von dem Prozessrohr auf die Schutzbarriere oder umgekehrt zu übertragen, und einen außerhalb der Schutzbarriere angeordneten Temperatursensor zum Erfassen einer Temperatur des Kryogens, wobei der Temperatursensor thermisch an die Wärmeleiteinrichtung angekoppelt ist.

Dadurch, dass der Temperatursensor außerhalb der Schutzbarriere angeordnet ist und die Wärmeleiteinrichtung die Wärmeübertragung von dem Prozessrohr hin zu der Schutzbarriere und umgekehrt übernimmt, kann auf ein Durchbrechen der Schutzbarriere zum Platzieren des Temperatursensors vorteilhafterweise verzichtet werden.

Das Kryogen ist vorzugweise Wasserstoff. Die Begriffe "Kryogen" und "Wasserstoff" können daher beliebig gegeneinander getauscht werden. Grundsätzlich kann das Kryogen jedoch auch ein beliebiges anderes Kryogen sein. Beispiele für Kryoflüssigkeiten, kryogene Fluide oder Flüssigkeiten, oder kurz Kryogene, sind neben dem zuvor erwähnten Wasserstoff flüssiges Helium, flüssiger Stickstoff oder flüssiger Sauerstoff. Unter einem "Kryogen" ist somit insbesondere eine Flüssigkeit zu verstehen. Das Kryogen kann daher auch als Kryoflüssigkeit bezeichnet werden. Das Kryogen kann verdampft und so in eine gasförmige Phase überführt werden. Nach dem Verdampfen ist das Kryogen ein Gas oder kann als gasförmiges oder verdampftes Kryogen bezeichnet werden. Der Begriff "Kryogen" kann somit beides, nämlich die Gasphase und die Flüssigphase, umfassen. Wie zuvor erwähnt, kann die Flüssigphase auch als Kryoflüssigkeit bezeichnet werden. Der Begriff "verdampftes Kryogen" bezieht sich vorliegend bevorzugt nur auf die Gasphase des Kryogens.

In dem Kryogenversorgungssystem kann sich nach oder bei einem Einfüllen des Kryogens eine Gaszone sowie eine darunterliegende Flüssigkeitszone bilden. Zwischen der Gaszone und der Flüssigkeitszone ist eine Phasengrenze vorgesehen. Das Kryogen weist also nach dem Einfüllen vorzugsweise zwei Phasen mit unterschiedlichen Aggregatszuständen, nämlich flüssig und gasförmig, auf. Die flüssige Phase kann in die gasförmige Phase und umgekehrt übergehen. Die flüssige Phase kann als Flüssigphase bezeichnet werden. Die gasförmige Phase kann als Gasphase bezeichnet werden. Auch eine rein flüssige Befüllung des Kryogenversorgungssystems ist möglich.

Der Verbraucher ist bevorzugt eine Brennstoffzelle. Unter einer "Brennstoffzelle" ist vorliegend eine galvanische Zelle zu verstehen, welche die chemische Reaktionsenergie eines kontinuierlich zugeführten Brennstoffs, vorliegend Wasserstoff, und eines Oxidationsmittels, vorliegend Sauerstoff, in elektrische Energie wandelt. Das Kryogen wird dem Verbraucher selbst insbesondere in gasförmiger Form mit einem definierten Versorgungsdruck zugeführt. Das heißt, das Kryogen wird vor dem Verbraucher oder stromaufwärts des Verbrauchers vollständig verdampft. Beispielsweise wird das Kryogen dem Verbraucher mit einem Versorgungsdruck von 1 bis 2,5 bara und einer Temperatur von +10 bis +25°C zugeführt. Der Versorgungsdruck kann jedoch auch bis zu 6 bara betragen.

Das Kryogenversorgungssystem kann auch als Wasserstoffversorgungssystem bezeichnet werden. Das Kryogenversorgungssystem ist insbesondere ein Rohr zum Fördern oder Transportieren des Kryogens. Alternativ kann das Kryogenversorgungssystem auch ein Speicherbehälter oder Speichertank zum Speichern des Kryogens sein. Das Kryogenversorgungssystem kann daher auch als Kryogenversorgungsrohr oder als Kryogenspeicherbehälter bezeichnet werden. Nachfolgend wird davon ausgegangen, dass das Kryogenversorgungssystem ein Rohr, insbesondere ein Kryogenversorgungsrohr, ist. Die Wärmeleiteinrichtung kann auch als Wärmeübertragungseinrichtung bezeichnet werden.

Das Prozessrohr ist insbesondere in unmittelbarem Kontakt mit dem Kryogen. Das heißt insbesondere, dass das Kryogen durch das Prozessrohr hindurchgeleitet wird. Dem Kryogenversorgungssystem ist eine Mittel- oder Symmetrieachse zugeordnet, zu der das Prozessrohr und die Schutzbarriere rotationssymmetrisch aufgebaut sein können. Die Schutzbarriere umgibt das Prozessrohr in einer Umfangsrichtung vollständig. Das heißt insbesondere, dass die Schutzbarriere das Prozessrohr umfänglich vollständig umschließt. Der zwischen dem Prozessrohr und der Schutzbarriere vorgesehene Spalt kann zumindest abschnittsweise mit einem Dämmungselement oder Isolationselement gefüllt sein. Der Spalt kann ferner mit einem Unterdruck oder Vakuum beaufschlagt sein. Der Spalt kann auch gasgefüllt sein.

Mit Hilfe der Wärmeleiteinrichtung ist es möglich, Wärme von dem mit dem Kryogen durchströmten Prozessrohr auf die Schutzbarriere und umgekehrt zu übertragen. Der Temperatursensor selbst ist vorzugsweise in berührendem Kontakt mit der Schutzbarriere. Somit kann die von dem Prozessrohr über die Wärmeleiteinrichtung auf die Schutzbarriere übertragene Wärme auf den Temperatursensor oder umgekehrt übertragen werden. Es ist somit zumindest eine mittelbare oder indirekte Temperaturermittlung des Prozessrohrs beziehungsweise des Kryogens möglich.

Dass der Temperatursensor "außerhalb" der Schutzbarriere angeordnet ist, bedeutet insbesondere, dass der Temperatursensor nicht innerhalb des Spalts platziert ist. Insbesondere ist der Temperatursensor außerhalb des Spalts platziert. Die thermische Ankopplung des Temperatursensors an die Wärmeleiteinrichtung erfolgt vorzugsweise mittelbar oder indirekt über die zwischen der Wärmeleiteinrichtung und dem Temperatursensor angeordnete Schutzbarriere. Somit gibt die Wärmeleiteinrichtung Wärme an die Schutzbarriere ab oder umgekehrt, welche wiederum Wärme an den Temperatursensor oder umgekehrt abgibt. Der Temperatursensor kann als Temperaturaufnehmer bezeichnet werden. Es können mehrere Temperatursensoren vorgesehen sein.

Gemäß einer Ausführungsform ist die Wärmeleiteinrichtung kraftschlüssig, stoffschlüssig und/oder formschlüssig mit dem Prozessrohr und/oder der Schutzbarriere verbunden.

Vorzugsweise umfasst die Wärmeleiteinrichtung ein ringförmiges Basiselement mit einer zylinderförmigen Außenseite und einer zylinderförmigen Innenseite. Die Innenseite ist insbesondere zumindest wärmeleitend mit dem Prozessrohr verbunden. Demgemäß ist die Außenseite insbesondere zumindest wärmeleitend mit der Schutzbarriere verbunden. Eine kraftschlüssige Verbindung setzt eine Normalkraft auf die miteinander zu verbindenden Flächen voraus. Kraftschlüssige Verbindungen können durch Reibschluss verwirklicht werden. Die gegenseitige Verschiebung der Flächen ist verhindert, solange eine durch die Haftreibung bewirkte Gegenkraft nicht überschritten wird. Beispielsweise ist die Wärmeleiteinrichtung auf das Prozessrohr aufgepresst oder aufgeschrumpft. Demgemäß kann die Wärmeleiteinrichtung in die Schutzbarriere eingepresst sein. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch eine Zerstörung der Verbindungsmittel und/oder der Verbindungspartner trennen lassen. Beispielsweise ist das Basiselement mit dem Prozessrohr und/oder der Schutzbarriere verklebt, verlötet, insbesondere hartverlötet, und/oder verschweißt. Eine formschlüssige Verbindung entsteht durch das Ineinander- oder Hintergreifen von mindestens zwei Verbindungspartnern.

Gemäß einer weiteren Ausführungsform weist die Wärmeleiteinrichtung einen sich entlang einer Radialrichtung der Wärmeleiteinrichtung erstreckenden Schlitz auf, der die Wärmeleiteinrichtung vollständig durchbricht.

Der Wärmeleiteinrichtung ist vorzugsweise die zuvor erwähnte Symmetrieachse zugeordnet, zu der die Wärmeleiteinrichtung im Wesentlichen rotationssymmetrisch aufgebaut ist. Auch das zuvor erwähnte Basiselement der Wärmeleiteinrichtung ist rotationssymmetrisch zu der Symmetrieachse aufgebaut. Der Schlitz erstreckt sich ausgehend von der Innenseite des Basiselements hin zu der Außenseite des Basiselements. Die Radialrichtung ist senkrecht zu der Symmetrieachse und weg von dieser orientiert. Die Wärmeleiteinrichtung beziehungsweise das Basiselement weist somit eine ringförmige Geometrie auf, die jedoch nicht geschlossen, sondern offen ist. Dadurch, dass der Schlitz vorgesehen ist, ist es möglich, die Wärmeleieinrichtung elastisch zu verformen und diese beispielsweise in der Radialrichtung aufzuweiten oder zusammenzudrücken. Dies kann bei einer Montage der Wärmeleiteinrichtung vorteilhaft sein.

Gemäß einer weiteren Ausführungsform ist die Wärmeleiteinrichtung fluiddurchlässig oder fluidundurchlässig.

Beispielsweise ist der Spalt gasgefüllt. Für den Fall, dass die Wärmeleiteinrichtung fluiddurchlässig ist, kann das Gas durch die Wärmeleiteinrichtung hindurchtreten. Hierzu können Bohrungen, Durchbrüche oder Aussparungen vorgesehen sein. Eine Aufteilung des Spalts in voneinander getrennte Gasräume oder Druckräume wird hierdurch vermieden. Für den Fall, dass die Wärmeleiteinrichtung fluidundurchlässig ist, kann das Gas nicht durch die Wärmeleiteinrichtung hindurchtreten. Hierdurch kann der Spalt gezielt in mehrere Gasräume oder Druckräume unterteilt werden.

Gemäß einer weiteren Ausführungsform weist die Wärmeleiteinrichtung Aussparungen auf, die als Durchgangsbohrungen oder als Sacklochbohrungen ausgebildet sind.

Die Aussparungen sind insbesondere in oder an dem Basiselement vorgesehen. Demgemäß weist das Basiselement die Aussparungen auf. Die Anzahl der Aussparungen ist beliebig. Die Aussparungen können im Querschnitt eine beliebige Geometrie aufweisen. Beispielsweise sind die Aussparungen im Querschnitt kreisrund oder vieleckig. Es können gleichzeitig Aussparungen vorgesehen sein, welche als Durchgangsbohrungen ausgebildet sind, sowie Aussparungen, die als Sacklochbohrungen ausgebildet sind. Mit Hilfe der Aussparungen kann die Wärmeleitfähigkeit der Wärmeleiteinrichtung bereichsweise verändert, insbesondere reduziert, werden. Dies wird dadurch erreicht, dass mit Hilfe der Aussparungen lokal eine Materialdicke oder Materialstärke der Wärmeleiteinrichtung beziehungsweise des Basiselements reduziert wird. Dies führt zu einer verschlechterten Wärmeleitung im Bereich der jeweiligen Aussparung. Die Aussparungen wirken als Wärmedämmung. In Bereichen, in denen keine Aussparungen vorhanden sind, bleibt die Wärmeleitfähigkeit unverändert. Diese Bereiche ohne Aussparungen können somit zur gezielten lokalen Wärmeleitung genutzt werden. Die Wärmeleiteinrichtung beziehungsweise das Basiselement kann somit eine speichenradförmige Geometrie aufweisen. Für den Fall, dass die Aussparungen Durchgangsbohrungen sind, kann das sich in dem Spalt befindliche Gas durch die Aussparungen hindurchströmen.

Gemäß einer weiteren Ausführungsform sind die Aussparungen zumindest teilweise mit einem Kunststoffmaterial gefüllt.

Dies verschlechtert die Wärmeleitfähigkeit der Wärmeleiteinrichtung bereichsweise nochmals. Als geeignetes Kunststoffmaterial kann beispielsweise Polytetrafluorethylen (PTFE) eingesetzt werden. Beispielsweise ist das Kunststoffmaterial in Form von Stopfen vorgesehen, welche in den Aussparungen aufgenommen sind. Mit Hilfe des Kunststoffmaterials können die Aussparungen für den Fall, dass diese als Durchgangsbohrungen ausgebildet sind, fluiddicht verschlossen werden.

Gemäß einer weiteren Ausführungsform sind die Aussparungen in einer Umfangsrichtung der Wärmeleiteinrichtung ungleichmäßig voneinander beabstandet angeordnet, so dass zwischen zwei benachbarten Aussparungen zumindest ein aussparungsfreier Bereich vorgesehen ist.

"Aussparungsfrei" heißt vorliegend, dass in dem zuvor erwähnten Bereich keine Aussparungen vorgesehen sind. Der Bereich ist somit massiv. Dies hat zur Folge, dass der aussparungsfreie Bereich im Vergleich zu den Aussparungen eine erhöhte oder verbesserte Wärmeleitfähigkeit aufweist. Hierdurch ist es möglich, die Wärme gezielt von dem Prozessrohr zu der Schutzbarriere zu leiten, und zwar bevorzugt nur in einem Bereich, in dem der Temperatursensor die Schutzbarriere kontaktiert.

Gemäß einer weiteren Ausführungsform ist der Spalt gasgefüllt, insbesondere mit Helium gefüllt.

Das Gas ist insbesondere derart zu wählen, dass dieses im Betrieb des Kryogenversorgungssystems nicht kondensiert. Bei der Verwendung des Kryogenversorgungssystems im Zusammenhang mit Wasserstoff ist als Gas zum Füllen des Spalts insbesondere Helium geeignet. Helium kondensiert bei den bei flüssigem Wasserstoff auftretenden Temperaturen nicht. Es können jedoch auch andere geeignete Gase eingesetzt werden.

Gemäß einer weiteren Ausführungsform umfasst das Kryogenversorgungssystem ferner eine Vakuumhülle, in der die Schutzbarriere aufgenommen ist, und einen Spalt, der zwischen der Schutzbarriere und der Vakuumhülle vorgesehen ist.

Der zwischen dem Prozessrohr und der Schutzbarriere vorgesehene Spalt kann als erster Spalt bezeichnet werden. Demgemäß kann der zwischen der Schutzbarriere und der Vakuumhülle vorgesehene Spalt als zweiter Spalt bezeichnet werden. Die Vakuumhülle ist insbesondere rohrförmig. Die Vakuumhülle kann daher auch als Vakuumrohr bezeichnet werden. Die Vakuumhülle umgibt die Schutzbarriere umfänglich vollständig, welche wiederum das Prozessrohr umfänglich vollständig umgibt. Das heißt insbesondere, dass das Kryogenversorgungssystem dreischichtig ist, wobei das Prozessrohr eine innerste oder erste Schicht oder innerste oder erste Hülle bildet, die Schutzbarriere eine zweite Schicht oder zweite Hülle bildet und die Vakuumhülle eine dritte Schicht oder dritte Hülle bildet. Das Prozessrohr, die Schutzbarriere und/oder die Vakuumhülle können aus einem metallischen Werkstoff, wie beispielsweise einer Aluminiumlegierung oder Edelstahl, gefertigt sein.

Gemäß einer weiteren Ausführungsform ist der Temperatursensor durch die Vakuumhülle und den Spalt hindurch zu der Schutzbarriere hingeführt.

Hierdurch ist es möglich, dass der Temperatursensor die Schutzbarriere direkt kontaktiert. Der Temperatursensor ist somit zumindest abschnittsweise in dem zwischen der Vakuumhülle und der Schutzbarriere vorgesehenen zweiten Spalt vorgesehen.

Gemäß einer weiteren Ausführungsform umfasst das Kryogenversorgungssystem ferner ein Schutzrohr, in dem der Temperatursensor aufgenommen ist, wobei das Schutzrohr durch die Vakuumhülle und den Spalt hindurch zu der Schutzbarriere hingeführt ist.

Das Schutzrohr ist insbesondere senkrecht zu der Symmetrieachse des Kryogenversorgungssystems angeordnet. Das Schutzrohr kann stirnseitig einen Deckel oder Verschluss aufweisen, welcher in Kontakt mit der Schutzbarriere ist. Der Temperatursensor kontaktiert in diesem Fall diesen Deckel oder Verschluss. Alternativ kann das Schutzrohr auch direkt mit der Schutzbarriere verbunden sein, so dass der in dem Schutzrohr aufgenommene Temperatursensor die Schutzbarriere direkt kontaktiert. In diesem Fall weist das Schutzrohr keinen Deckel oder Verschluss auf.

Gemäß einer weiteren Ausführungsform ist das Schutzrohr fluiddicht mit der Vakuumhülle verbunden.

Insbesondere ist das Schutzrohr stoffschlüssig mit der Vakuumhülle verbunden. Beispielsweise ist das Schutzrohr in die Vakuumhülle eingelötet, insbesondere hartgelötet, oder eingeschweißt. Das Schutzrohr kann auch stoffschlüssig mit der Schutzbarriere verbunden sein.

Gemäß einer weiteren Ausführungsform weist die Wärmeleiteinrichtung ein Wärmeleitelement zum Übertragen von Wärme von dem Prozessrohr auf die Schutzbarriere oder umgekehrt auf.

Das Wärmeleitelement bietet die Möglichkeit, die Übertragung der Wärme lokal zu konzentrieren. Das Wärmeleitelement kann zylinderförmig oder stabförmig ausgebildet sein. Das Wärmeleitelement kann auch als Wärmeübertragungsspeiche bezeichnet werden. Das Wärmeleitelement kann ferner auch als Wärmeübertragungselement bezeichnet werden.

Gemäß einer weiteren Ausführungsform weist die Wärmeleiteinrichtung ein Basiselement auf, welches das Wärmeleitelement trägt, wobei die Wärmeleitfähigkeit eines Materials, aus dem das Wärmeleitelement gefertigt ist, größer als die Wärmeleitfähigkeit eines Materials ist, aus dem das Basiselement gefertigt ist.

Beispielsweise kann das Basiselement aus rostträgem oder rostfreiem Stahl gefertigt sein. In diesem Fall kann das Wärmeleitelement beispielsweise aus einer Kupferlegierung oder aus einer Aluminiumlegierung gefertigt sein. Es können mehrere Wärmeleitelemente vorgesehen sein. Die Anzahl der Wärmeleitelemente ist grundsätzlich beliebig. Es kann beispielsweise genau ein Wärmeleitelement vorgesehen sein. Es können jedoch auch zwei, drei oder mehr als drei Wärmeleitelemente vorgesehen sein.

Gemäß einer weiteren Ausführungsform weist das Basiselement eine Bohrung auf, in der das Wärmeleitelement aufgenommen ist, wobei eine Symmetrieachse der Bohrung senkrecht zu einer Symmetrieachse der Wärmeleiteinrichtung orientiert ist.

Beispielsweise ist das Wärmeleitelement in die Bohrung des Basiselements eingepresst. Die Bohrung erstreckt sich von der Außenseite des Basiselements hin zu der Innenseite. Die Bohrung durchbricht das Basiselement somit entlang der Radialrichtung betrachtet vollständig.

"Ein" ist vorliegend nicht zwingend beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl an Elementen gegeben ist. Vielmehr sind zahlenmäßige Abweichungen nach oben und nach unten möglich, soweit nichts Gegenteiliges angegeben ist.

Weitere mögliche Implementierungen des Kryogenversorgungssystems umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zur jeweiligen Grundform des Kryogenversorgungssystems hinzufügen.

Weitere vorteilhafte Ausgestaltungen und Aspekte des Kryogenversorgungssystems sind Gegenstand der Unteransprüche sowie der im Folgenden beschriebenen Ausführungsbeispiele des Kryogenversorgungssystems. Im Weiteren wird das Kryogenversorgungssystem anhand von bevorzugten Ausführungsformen unter Bezugnahme auf die beigelegten Figuren näher erläutert.
Fig. 1 zeigt eine schematische Schnittansicht einer Ausführungsform eines Kryogenversorgungssystems;
Fig. 2 zeigt eine schematische Aufsicht einer Wärmeleiteinrichtung für das Kryogenversorgungssystem gemäß Fig. 1;
Fig. 3 zeigt eine schematische Schnittansicht der Wärmeleiteinrichtung gemäß der Schnittlinie III-III der Fig. 2; und
Fig. 4 zeigt eine weitere schematische Schnittansicht der Wärmeleiteinrichtung gemäß der Schnittlinie IV-IV der Fig. 2.

In den Figuren sind gleiche oder funktionsgleiche Elemente mit denselben Bezugszeichen versehen worden, sofern nichts anderes angegeben ist.

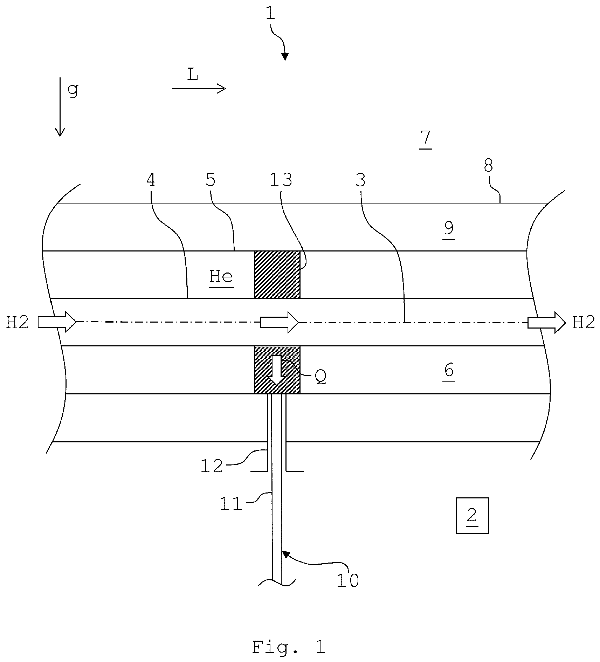

Die Fig. 1 zeigt eine schematische Schnittansicht einer Ausführungsform eines Kryogenversorgungssystems 1. Das Kryogenversorgungssystem 1 kann ein Rohr oder ein Behälter sein. Das Kryogenversorgungssystem 1 ist geeignet, einem Verbraucher 2, beispielsweise einer Brennstoffzelle, ein Kryogen, insbesondere Wasserstoff H2, zuzuführen. Das Kryogenversorgungssystem 1 kann daher auch als Wasserstoffversorgungssystem bezeichnet werden.

Ferner kann das Kryogenversorgungssystem 1 auch dazu geeignet sein, Wasserstoff H2 zu speichern. Das Kryogenversorgungssystem 1 kann ein Speicherbehälter zum Speichern von Wasserstoff H2 sein. Das Kryogenversorgungssystem 1 kann jedoch auch ein Rohr zum Fördern oder Transportieren von Wasserstoff H2 sein. Nachfolgend wird davon ausgegangen, dass das Kryogenversorgungssystem 1 ein Rohr oder eine Transportleitung ist.

Das Kryogenversorgungssystem 1 ist zur Aufnahme und/oder zum Fördern von flüssigem Wasserstoff H2 (Siedepunkt 1 bara: 20,268 K = -252,882 °C) geeignet. Das Kryogenversorgungssystem 1 kann jedoch auch für andere kryogene Flüssigkeiten oder Kryoflüssigkeiten eingesetzt werden. Beispiele für kryogene Fluide oder Flüssigkeiten, oder kurz Kryogene, sind neben dem zuvor erwähnten flüssigen Wasserstoff H2 flüssiges Helium He (Siedepunkt 1 bara: 4,222 K = -268,928 °C), flüssiger Stickstoff N2 (Siedepunkt 1 bara: 77,35 K = -195,80 °C) oder flüssiger Sauerstoff O2 (Siedepunkt 1 bara: 90,18 K = -182,97 °C).

Das Kryogenversorgungssystem 1 ist für einen Einsatz in oder an einem Fahrzeug (nicht gezeigt) geeignet. Das Fahrzeug kann beispielsweise ein maritimes Wasserfahrzeug, insbesondere ein Schiff, sein. Das Fahrzeug kann als maritimes Fahrzeug bezeichnet werden. Insbesondere kann das Fahrzeug eine maritime Personenfähre sein. Alternativ kann das Fahrzeug auch ein Landfahrzeug sein. Nachfolgend wird jedoch davon ausgegangen, dass das Fahrzeug ein Wasserfahrzeug ist.

Unter einer "Brennstoffzelle" ist vorliegend eine galvanische Zelle zu verstehen, welche die chemische Reaktionsenergie eines kontinuierlich zugeführten Brennstoffs, vorliegend Wasserstoff, und eines Oxidationsmittels, vorliegend Sauerstoff, in elektrische Energie wandelt. Mit Hilfe der erhaltenen elektrischen Energie kann beispielsweise ein nicht gezeigter Elektromotor angetrieben werden, der wiederum eine Schiffsschraube zum Antreiben des Fahrzeugs antreibt. Zum Versorgen des Verbrauchers 2 mit Wasserstoff H2 ist das Kryogenversorgungssystem 1 vorgesehen.

Das Kryogenversorgungssystem 1 ist geeignet, dem Verbraucher 2, der vorliegend bevorzugt eine Brennstoffzelle ist, gasförmigen Wasserstoff H2 mit einem definierten Versorgungsdruck und einer definierten Versorgungstemperatur bereitzustellen. Beispielsweise wird der Wasserstoff H2 dem Verbraucher 2 gasförmig mit einem Versorgungsdruck von 1 bis 2,5 bara und einer Temperatur von +10 bis +25 °C zugeführt. Der Versorgungsdruck kann jedoch auch bis zu 6 bara betragen.

Das Kryogenversorgungssystem 1 ist ein Rohr und kann daher auch als Kryogenversorgungsrohr bezeichnet werden. Das Kryogenversorgungssystem 1 ist rotationssymmetrisch zu einer Mittel- oder Symmetrieachse 3 aufgebaut. Eine Längsrichtung L des Kryogenversorgungssystems 1 ist entlang der Symmetrieachse 3 orientiert. Das Kryogenversorgungssystem 1 weist ein Hauptrohr oder Prozessrohr 4 auf, durch das der flüssige Wasserstoff H2 geleitet wird. Das Prozessrohr 4 ist in direktem Kontakt mit dem flüssigen Wasserstoff H2. Das Prozessrohr 4 kann aus einem metallischen Werkstoff, insbesondere aus Edelstahl, gefertigt sein.

Das Prozessrohr 4 ist in einer rohrförmigen Schutzbarriere 5 aufgenommen, die das Prozessrohr 4 umfänglich umschließt. Zwischen dem Prozessrohr 4 und der Schutzbarriere 5 ist ein Zwischenraum oder Spalt 6 vorgesehen. Der Spalt 6 kann mit einem Inertgas, beispielsweise mit Stickstoff oder Helium He, gefüllt sein. Der Spalt 6 kann auch mit einem Unterdruck oder einem Vakuum beaufschlagt sein. In dem Vakuum herrscht im Vergleich zu einer Umgebung 7 des Kryogenversorgungssystems 1 ein Unterdruck. In dem Spalt 6 kann ein Dämmungselement oder Isolierelement vorgesehen sein, das den Spalt 6 zumindest teilweise oder vollständig ausfüllt. Das Isolierelement kann eine mehrlagige Isolationsschicht (Engl.: Multilayer Insulation, MLI) aufweisen oder als solche ausgebildet sein. Die Schutzbarriere 5 kann aus einem metallischen Werkstoff, beispielsweise aus einer Aluminiumlegierung oder aus Edelstahl, gefertigt sein.

Eine rohrförmige Vakuumhülle 8 umschließt die Schutzbarriere 5. Zwischen der Schutzbarriere 5 und der Vakuumhülle 8 ist ein Zwischenraum oder Spalt 9 vorgesehen. Der Spalt 9 kann mit einem Unterdruck oder einem Vakuum beaufschlagt sein. In dem Spalt 9 kann ein Dämmungselement oder Isolierelement vorgesehen sein, das den Spalt 9 zumindest teilweise oder vollständig ausfüllt. Das Isolierelement kann eine wie zuvor erwähnte mehrlagige Isolationsschicht aufweisen oder als solche ausgebildet sein. Die Vakuumhülle 8 kann aus einem metallischen Werkstoff, beispielsweise aus einer Aluminiumlegierung oder aus Edelstahl, gefertigt sein. Die Vakuumhülle 8 grenzt das Kryogenversorgungssystem 1 zu der Umgebung 7 hin ab.

Das Kryogenversorgungssystem 1 umfasst weiterhin eine Temperaturmessanordnung 10, die einen Temperaturaufnehmer oder Temperatursensor 11 aufweist, mit dessen Hilfe eine Temperatur des flüssigen Wasserstoffs H2 in dem Prozessrohr 4 erfassbar ist. Neben dem Temperatursensor 11 weist die Temperaturmessanordnung 10 ein Schutzrohr 12 auf, das senkrecht zu der Symmetrieachse 3 platziert ist. In dem Schutzrohr 12 ist der Temperatursensor 11 aufgenommen.

Das Schutzrohr 12 ist durch die Vakuumhülle 8 hindurch bis zu der Schutzbarriere 5 geführt, so dass das Schutzrohr 12 an der Schutzbarriere 5 ansteht. Das Schutzrohr 12 erstreckt sich somit durch den Spalt 9 hindurch. Das Schutzrohr 12 kann in die Vakuumhülle 8 eingelötet oder eingeschweißt sein. Das Schutzrohr 12 ist nicht durch die Schutzbarriere 5 hindurchgeführt. Das Schutzrohr 12 kann jedoch stirnseitig mit der Schutzbarriere 5 verbunden, beispielsweise mit dieser verlötet oder verschweißt, sein. Das Schutzrohr 12 ist somit stirnseitig von der Schutzbarriere 5 verschlossen. Alternativ kann das Schutzrohr 12 der Schutzbarriere 5 zugewandt mit einem Deckel oder dergleichen fluiddicht verschlossen sein. In dem letztgenannten Fall kann der Deckel beispielsweise an der Schutzbarriere 5 anliegen. Bezüglich einer Schwerkraftrichtung g betrachtet ist das Schutzrohr 12 an einem untersten Punkt oder Bereich der Schutzbarriere 5 platziert.

Die Temperaturmessanordnung 10 umfasst ferner eine Wärmeübertragungseinrichtung oder Wärmeleiteinrichtung 13 zum Übertragen oder Leiten von Wärme Q von dem Prozessrohr 4 zu der Schutzbarriere 5 und umgekehrt. Damit ist die Wärmeleiteinrichtung 13 auch dazu geeignet, Wärme Q von dem durch das Prozessrohr 4 strömenden flüssigen Wasserstoff H2 zu dem Temperatursensor 11 und umgekehrt zu transportieren. Die Wärmeleiteinrichtung 13 ist hülsenförmig oder ringförmig und umgreift das Prozessohr 4. Die Wärmeleiteinrichtung 13 kann auch als Wärmeleithülse oder Wärmeleitring bezeichnet werden. Die Wärmeleiteinrichtung 13 ist in dem Spalt 6 platziert. Beispielsweise ist die Wärmeleiteinrichtung 13 mit dem Prozessrohr 4 und mit der Schutzbarriere 5 stoffschlüssig verbunden.

Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Stoffschlüssig kann beispielsweise durch Kleben, Hartlöten, Löten oder Schweißen verbunden werden. Das heißt, dass die Wärmeleiteinrichtung 13 mit dem Prozessrohr 4 und/oder der Schutzbarriere 5 verklebt, verlötet, insbesondere hartverlötet, und/oder verschweißt ist. Es kann optional oder zusätzlich auch eine kraftschlüssige Verbindung und/oder eine formschlüssige Verbindung vorgesehen sein.

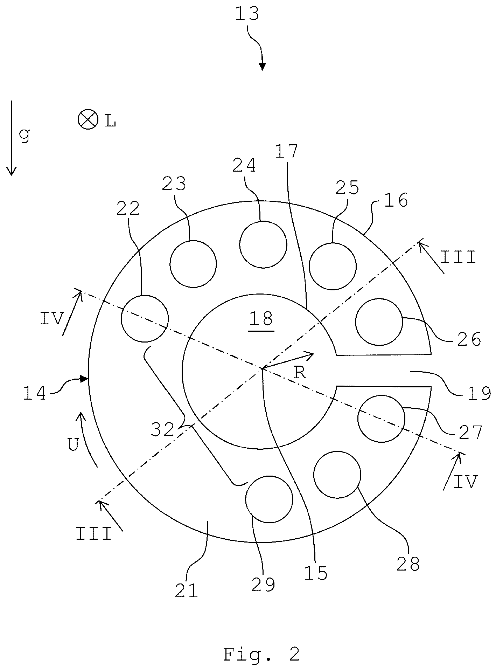

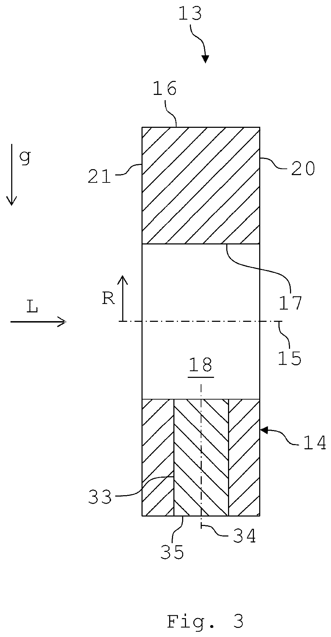

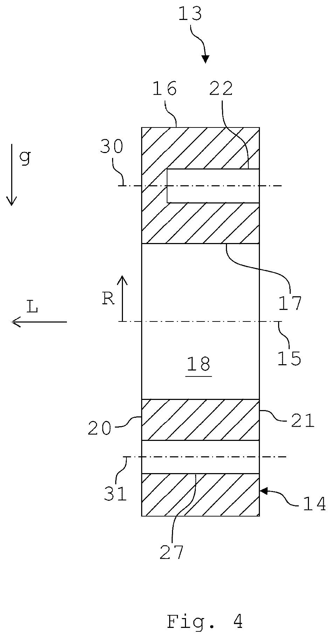

Die Fig. 2 zeigt eine schematische Aufsicht einer Ausführungsform einer wie zuvor erwähnten Wärmeleiteinrichtung 13. Die Fig. 3 zeigt eine schematische Schnittansicht der Wärmeleiteinrichtung 13 gemäß der Schnittlinie III-III der Fig. 2. Die Fig. 4 zeigt eine weitere schematische Schnittansicht der Wärmeleiteinrichtung 13 gemäß der Schnittlinie IV-IV der Fig. 2. Nachfolgend wird auf die Fig. 2 bis 4 gleichzeitig Bezug genommen.

Die Wärmeleiteinrichtung 13 umfasst einen Basiskörper oder ein Basiselement 14. Das Basiselement 14 ist ringförmig oder hülsenförmig ausgestaltet und ist rotationssymmetrisch zu einer Mittel- oder Symmetrieachse 15 aufgebaut. Eine zylinderförmige Außenseite 16 des Basiselements 14 ist mit der Schutzbarriere 5 wärmeleitend gekoppelt. Beispielsweise ist die Außenseite 16 stoffschlüssig mit der Schutzbarriere 5 verbunden. Die Außenseite 16 ist rotationssymmetrisch zu der Symmetrieachse 15 aufgebaut. Die Symmetrieachsen 3, 15 können koaxial angeordnet sein.

Der Außenseite 16 abgewandt weist das Basiselement 14 eine zylinderförmige Innenseite 17 auf, die einen die Wärmeleiteinrichtung 13 mittig durchbrechenden Durchbruch 18 begrenzt. Durch den Durchbruch 18 ist das Prozessrohr 4 hindurchgeführt. Die Innenseite 17 ist wärmeleitend mit dem Prozessrohr 4 gekoppelt. Beispielsweise ist die Innenseite 17 stoffschlüssig mit dem Prozessrohr 4 verbunden. Die Innenseite 17 ist rotationssymmetrisch zu der Symmetrieachse 15 aufgebaut.

Entlang einer Umfangsrichtung U betrachtet, die entlang der Außenseite 16 beziehungsweise entlang der Innenseite 17 orientiert ist, ist die Wärmeleiteinrichtung 13 beziehungsweise das Basiselement 14 nicht ringförmig geschlossen, sondern offen und weist einen Spalt oder Schlitz 19 auf, der sich entlang einer Radialrichtung R betrachtet, die senkrecht zu der Symmetrieachse 15 und von dieser weg orientiert ist, von der Innenseite 17 bis zu der Außenseite 16 erstreckt und somit das Basiselement 14 vollständig durchbricht.

Die Wärmeleiteinrichtung 13 beziehungsweise das Basiselement 14 umfasst eine erste Stirnseite 20 und eine der ersten Stirnseite 20 abgewandte zweite Stirnseite 21. Von zumindest einer Stirnseiten 20, 21 aus erstrecken sich eine Vielzahl an Aussparungen 22 bis 29 in das Basiselement 14 hinein beziehungsweise durch dieses hindurch. Die Aussparungen 22 bis 29 können als Sacklochbohrungen ausgeführt sein, wie dies in der Fig. 4 anhand der Aussparung 22 gezeigt ist. Alternativ können die Aussparungen 22 bis 29 Durchgangsbohrungen sein, wie dies in der Fig. 4 anhand der Aussparung 27 gezeigt ist. Jeder Aussparung 22 bis 29 ist eine Mittel- oder Symmetrieachse 30, 31 zugeordnet, die parallel zu der Symmetrieachse 15 angeordnet und entlang der Radialrichtung R beabstandet von dieser angeordnet ist.

Mit Hilfe der Aussparungen 22 bis 29 ist es möglich, die Wärmeleiteinrichtung 13 derart zu gestalten, dass möglichst wenig Material zwischen der Innenseite 17 und der Außenseite 16 angeordnet ist. Die Aussparungen 22 bis 29 behindern den Transport von Wärme Q von der Innenseite 17 zu der Außenseite 16 und umgekehrt. Ein Bereich 32 zwischen den Aussparungen 22, 29 ist bohrungsfrei oder aussparungsfrei beziehungsweise massiv. Das heißt, dass in dem Bereich 32 keine Aussparungen 22 bis 29 vorgesehen sind. Hierdurch ist die Wärmeleitung in dem Bereich 32 im Vergleich zu den Aussparungen 22 bis 29 verbessert.

Für den Fall, dass die Aussparungen 22 bis 29 als Durchgangsbohrungen ausgeführt sind, ist es möglich, dass ein in dem Spalt 6 aufgenommenes Gas, beispielsweise Helium He, durch die Wärmeleiteinrichtung 13 hindurchströmen kann. Die Wärmeleiteinrichtung 13 ist somit fluiddurchlässig. Die Wärmeleiteinrichtung 13 kann beispielsweise als fluiddurchlässiges Speichenrad ausgebildet sein. Dies ist jedoch nicht zwingend erforderlich. Das heißt, dass die Wärmeleiteinrichtung 13 auch fluiddicht sein kann.

Die Aussparungen 22 bis 29 können mit einem schlecht wärmeleitenden Material, wie beispielsweise einem Kunststoffmaterial, ausgefüllt sein. Als Kunststoffmaterial kann Polytetrafluorethylen (PTFE) eingesetzt werden. Das Kunststoffmaterial kann die Form von die Aussparungen 22 bis 29 verschließenden Stopfen aufweisen. Wenn die Aussparungen 22 bis 29 mit dem Kunststoffmaterial gefüllt sind, kann verhindert werden, dass das in dem Spalt 6 aufgenommene Gas, insbesondere Helium He, die Wärmeleiteinrichtung 13 durchströmt. Alternativ werden die Aussparungen 22 bis 29 als Sacklochbohrungen ausgeführt. Durch die Fluiddichtheit der Wärmeleiteinrichtung 13 kann eine lokale konvektive Übertragung von Wärme Q durch das in dem Spalt 6 aufgenommene Gas, insbesondere Helium He, vermieden oder zumindest reduziert werden.

Das Basiselement 14 weist eine Bohrung 33 mit einer Mittel- oder Symmetrieachse 34 auf, die senkrecht zu der Symmetrieachse 15 orientiert ist. Die Bohrung 33 erstreckt sich ausgehend von der Außenseite 16 in Richtung der Innenseite 17. Die Bohrung 33 durchbricht sowohl die Außenseite 16 als auch die Innenseite 17. In der Bohrung 33 ist ein Wärmeleitelement 35 aufgenommen. Das Wärmeleitelement 35 kann auch als Wärmeleitspeiche bezeichnet werden.

Das Wärmeleitelement 35 ist zylinderförmig. Das Wärmeleitelement 35 kann in die Bohrung 33 eingepresst sein. Das Wärmeleitelement 35 kontaktiert sowohl das Prozessrohr 4 als auch die Schutzbarriere 5 und dient somit der Übertragung von Wärme Q von dem Prozessrohr 4 auf die Schutzbarriere 5 und umgekehrt. Es kann mehr als ein Wärmeleitelement 35 vorgesehen sein. Das Wärmeleitelement 35 ist in dem Bereich 32 angeordnet.

Das Wärmeleitelement 35 kann auch als Wärmeübertragungselement, Wärmeleitkörper, Wärmeleiteinsatz oder Leitkörpereinsatz bezeichnet werden. Das Wärmeleitelement 35 ist aus einem Material gefertigt, das eine bessere Wärmeleitfähigkeit aufweist als das Material, aus dem das Basiselement 14 gefertigt ist. Beispielsweise ist das Wärmeleitelement 35 aus einer Kupferlegierung oder aus einer Aluminiumlegierung gefertigt. Das Basiselement 14 selbst kann beispielsweise aus rostfreiem Stahl gefertigt sein, der eine geringere Wärmeleitfähigkeit aufweist als das für das Basiselement 14 verwendete Material. Das Basiselement 14 kann auch aus einem, insbesondere ausgasungsfreien, Kunststoffmaterial gefertigt sein.

Die Wärmeleitung erfolgt dann von dem Wasserstoff H2 zu dem Prozessrohr 4, von dem Prozessrohr 4 zu dem Wärmeleitelement 35, von dem Wärmeleitelement 35 zu der Schutzbarriere 5 und von der Schutzbarriere 5 gegebenenfalls unter Zwischenschaltung des Schutzrohrs 12 zu dem Temperatursensor 11 oder umgekehrt. Für den Fall, dass die Wärmeleiteinrichtung 13 kein Wärmeleitelement 35 aufweist, übernimmt das Basiselement 14 selbst die Wärmeübertragung.

Mit Hilfe der Wärmeleiteinrichtung 13 ist es somit möglich, eine Temperaturmessung durchzuführen, die aus prozesstechnischer Sicht ausreichend schnell reagiert und gleichzeitig möglichst wenig Wärmeleitung erlaubt. Die Schutzbarriere 5 wird vorteilhafterweise zur Temperaturmessung nicht durchbrochen oder beschädigt. Vorteilhafterweise führt die Wärmeleiteinrichtung 13 nicht zu einer Segmentierung des Spalts 6. Dies kann durch eine Fluiddurchlässigkeit der Wärmeleiteinrichtung 13 erreicht werden.

Die Wärmeleiteinrichtung 13 ist derart ausgeführt, dass eine Prozesstemperatur des Wasserstoffs H2 zur Temperaturmessung gerichtet geführt wird.

Die Wärmeleiteinrichtung 13 ist somit eine Hülse, die zwischen die Schutzbarriere 5 und die Vakuumhülle 8 formschlüssig eingebracht wird. Die Wärmeleiteinrichtung 13 wird formschlüssig und/oder stoffschlüssig mit der Schutzbarriere 5 und/oder der Vakuumhülle 8 verbunden.

Zum Montieren der Wärmeleiteinrichtung 13 wird diese als Passung eingesteckt und mit der Schutzbarriere 5 und/oder der Vakuumhülle 8 formschlüssig verbunden. Zur leichteren Installation ist das Basiselement 14 einteilig geschlitzt ausgeführt oder mehrteilig in mehreren Segmenten aufgebaut. "Einteilig" oder "einstückig" heißt dabei vorliegend, dass das Basiselement 14 nicht aus unterschiedlichen Bauteilen zusammengesetzt ist, sondern ein einziges Bauteil bildet. "Materialeinstückig" heißt vorliegend, dass das Basiselement 14 durchgehend aus demselben Werkstoff gefertigt ist.

Das Basiselement 14 beziehungsweise die Wärmeleiteinrichtung 13 ist geschlitzt. Dies ist vor allem vorteilhaft, wenn der Spalt 6 mit einem Gas gefüllt ist, um Undichtigkeiten zwischen einzelnen Passagen erkennen zu können. Eine Lage des Wärmeleitelements 35 kann beliebig gewählt werden. Beispielsweise kann eine Messung der kältesten Temperatur (Fig. 1) bei 6 Uhr (unten +- 90°) oder eine Messung der wärmsten Temperatur bei 12 Uhr (oben +- 45°) erfolgen.

Aufgrund der möglichen Temperaturunterschiede zwischen dem Prozessrohr 4 und der Schutzbarriere 5 wird das Material des Basiselements 14 vorzugweise derart ausgewählt, dass ein gleicher oder kleinerer Wärmeausdehnungskoeffizient wie der kleinere Wärmeausdehnungskoeffizient des Prozessrohrs 4 oder der Schutzbarriere 5 erreicht wird.

Eine Installation des Temperatursensors 11 kann ohne Schutzhülse erfolgen. Bei einer Drei-Hüllen-Ausführung des Kryogenversorgungssystems 1 kann eine Hülle als Vakuumisolierung oder Superisolierung ausgeführt werden und die innere Hülle mit einem Gas gefüllt sein. Bei der Verwendung von flüssigem Wasserstoff H2 ist dieses Gas Helium He. Nur Helium He kondensiert bei den bei flüssigem Wasserstoff H2 auftretenden Temperaturen nicht.

Durch das Füllen des Spalts 6 mit einem Inertgas kann eine Undichtigkeit zwischen allen Passagen detektiert werden. Der Temperatursensor 11 wird auf der Vakuumhülle 8 installiert. Die Vakuumhülle 8 wird also nicht durchbrochen. Es ist möglich, mehrere Wärmeleitelemente 35 zur räumlich nahen Installation mehrerer Temperatursensoren 11 vorzusehen.

Obwohl die vorliegende Erfindung anhand von Ausführungsbeispielen beschrieben wurde, ist sie vielfältig modifizierbar, ohne den Schutzbereich der beigefügten Ansprüche zu verlassen.

### Verwendete Bezugszeichen

- 1: Kryogenversorgungssystem
- 2: Verbraucher
- 3: Symmetrieachse
- 4: Prozessrohr
- 5: Schutzbarriere
- 6: Spalt
- 7: Umgebung
- 8: Vakuumhülle
- 9: Spalt
- 10: Temperaturmessanordnung
- 11: Temperatursensor
- 12: Schutzrohr
- 13: Wärmeleiteinrichtung
- 14: Basiselement
- 15: Symmetrieachse
- 16: Außenseite
- 17: Innenseite
- 18: Durchbruch
- 19: Schlitz
- 20: Stirnseite
- 21: Stirnseite
- 22: Aussparung
- 23: Aussparung
- 24: Aussparung
- 25: Aussparung
- 26: Aussparung
- 27: Aussparung
- 28: Aussparung
- 29: Aussparung
- 30: Symmetrieachse
- 31: Symmetrieachse
- 32: Bereich
- 33: Bohrung
- 34: Symmetrieachse
- 35: Wärmeleitelement

- g: Schwerkraftrichtung
- He: Helium/Gas
- H2: Wasserstoff/Kryogen
- L: Längsrichtung
- Q: Wärme
- R: Radialrichtung
- U: Umfangsrichtung

## Patentansprüche

1. Kryogenversorgungssystem (1) zum Versorgen eines Verbrauchers (2) mit einem Kryogen (H2), mit einem Prozessrohr (4), durch welches das Kryogen (H2) hindurchleitbar ist, einer Schutzbarriere (5), in der das Prozessrohr (4) aufgenommen ist, einem Spalt (6), der zwischen dem Prozessrohr (4) und der Schutzbarriere (5) vorgesehen ist, einer in dem Spalt (6) angeordneten Wärmeleiteinrichtung (13), die dazu eingerichtet ist, Wärme (Q) von dem Prozessrohr (4) auf die Schutzbarriere (5) oder umgekehrt zu übertragen, und einem außerhalb der Schutzbarriere (5) angeordnetem Temperatursensor (11) zum Erfassen einer Temperatur des Kryogens (H2), wobei der Temperatursensor (11) thermisch an die Wärmeleiteinrichtung (13) angekoppelt ist.

2. Kryogenversorgungssystem nach Anspruch 1, wobei die Wärmeleiteinrichtung (13) kraftschlüssig, stoffschlüssig und/oder formschlüssig mit dem Prozessrohr (4) und/oder der Schutzbarriere (5) verbunden ist.

3. Kryogenversorgungssystem nach Anspruch 1 oder 2, wobei die Wärmeleiteinrichtung (13) einen sich entlang einer Radialrichtung (R) der Wärmeleiteinrichtung (13) erstreckenden Schlitz (19) aufweist, der die Wärmeleiteinrichtung (13) vollständig durchbricht.

4. Kryogenversorgungssystem nach einem der Ansprüche 1 - 3, wobei die Wärmeleiteinrichtung (13) fluiddurchlässig oder fluidundurchlässig ist.

5. Kryogenversorgungssystem nach einem der Ansprüche 1 - 4, wobei die Wärmeleiteinrichtung (13) Aussparungen (22 - 29) aufweist, die als Durchgangsbohrungen oder als Sacklochbohrungen ausgebildet sind.

6. Kryogenversorgungssystem nach Anspruch 5, wobei die Aussparungen (22 - 29) zumindest teilweise mit einem Kunststoffmaterial gefüllt sind.

7. Kryogenversorgungssystem nach Anspruch 5 oder 6, wobei die Aussparungen (22 - 29) in einer Umfangsrichtung (U) der Wärmeleiteinrichtung (13) ungleichmäßig voneinander beabstandet angeordnet sind, so dass zwischen zwei benachbarten Aussparungen (22, 29) zumindest ein aussparungsfreier Bereich (32) vorgesehen ist.

8. Kryogenversorgungssystem nach einem der Ansprüche 1 - 7, wobei der Spalt (6) gasgefüllt, insbesondere mit Helium (He) gefüllt, ist.

9. Kryogenversorgungssystem nach einem der Ansprüche 1 - 8, ferner umfassend eine Vakuumhülle (8), in der die Schutzbarriere (5) aufgenommen ist, und einen Spalt (9), der zwischen der Schutzbarriere (5) und der Vakuumhülle (8) vorgesehen ist.

10. Kryogenversorgungssystem nach Anspruch 9, wobei der Temperatursensor (11) durch die Vakuumhülle (8) und den Spalt (9) hindurch zu der Schutzbarriere (5) hingeführt ist.

11. Kryogenversorgungssystem nach Anspruch 10, ferner umfassend ein Schutzrohr (12), in dem der Temperatursensor (11) aufgenommen ist, wobei das Schutzrohr (12) durch die Vakuumhülle (8) und den Spalt (9) hindurch zu der Schutzbarriere (5) hingeführt ist.

12. Kryogenversorgungssystem nach Anspruch 11, wobei das Schutzrohr (12) fluiddicht mit der Vakuumhülle (8) verbunden ist.

13. Kryogenversorgungssystem nach einem der Ansprüche 1 - 12, wobei die Wärmeleiteinrichtung (13) ein Wärmeleitelement (35) zum Übertragen von Wärme (Q) von dem Prozessrohr (4) auf die Schutzbarriere (5) oder umgekehrt aufweist.

14. Kryogenversorgungssystem nach Anspruch 13, wobei die Wärmeleiteinrichtung (13) ein Basiselement (14) aufweist, welches das Wärmeleitelement (35) trägt, wobei die Wärmeleitfähigkeit eines Materials, aus dem das Wärmeleitelement (35) gefertigt ist, größer als die Wärmeleitfähigkeit eines Materials ist, aus dem das Basiselement (14) gefertigt ist.

15. Kryogenversorgungssystem nach Anspruch 14, wobei das Basiselement (14) eine Bohrung (33) aufweist, in der das Wärmeleitelement (35) aufgenommen ist, wobei eine Symmetrieachse (34) der Bohrung (33) senkrecht zu einer Symmetrieachse (15) der Wärmeleiteinrichtung (13) orientiert ist.

## Claims

1. Cryogen supply system (1) for supplying a cryogen (H2) to a consumer (2), comprising a process pipe (4) through which the cryogen (H2) can be conducted, a protective barrier (5) in which the process pipe (4) is accommodated, a gap (6) which is provided between the process pipe (4) and the protective barrier (5), a heat conduction device (13) which is arranged in the gap (6) and is designed to transfer heat (Q) from the process pipe (4) to the protective barrier (5) or vice versa, and a temperature sensor (11) arranged outside the protective barrier (5) for detecting a temperature of the cryogen (H2), wherein the temperature sensor (11) is thermally coupled to the heat conduction device (13).

2. Cryogen supply system according to claim 1, wherein the heat conduction device (13) is connected to the process pipe (4) and/or the protective barrier (5) in a force-fitting, integrally bonded, and/or form-fitting manner.

3. Cryogen supply system according to claim 1 or claim 2, wherein the heat conduction device (13) has a slot (19) which extends in a radial direction (R) of the heat conduction device (13) and passes fully through the heat conduction device (13).

4. Cryogen supply system according to any of claims 1 - 3, wherein the heat conduction device (13) is fluid-permeable or fluid-impermeable.

5. Cryogen supply system according to any of claims 1 - 4, wherein the heat conduction device (13) has recesses (22 - 29) which are in the form of through holes or blind holes.

6. Cryogen supply system according to claim 5, wherein the recesses (22 - 29) are filled at least in part with a plastics material.

7. Cryogen supply system according to claim 5 or claim 6, wherein the recesses (22 - 29) are arranged so as to be unevenly spaced apart in a peripheral direction (U) of the heat conduction device (13), so that at least one recess-free region (32) is provided between two adjacent recesses (22, 29).

8. Cryogen supply system according to any of claims 1 - 7, wherein the gap (6) is gas-filled, in particular filled with helium (He).

9. Cryogen supply system according to any of claims 1 - 8, further comprising a vacuum envelope (8) in which the protective barrier (5) is accommodated and a gap (9) provided between the protective barrier (5) and the vacuum envelope (8).

10. Cryogen supply system according to claim 9, wherein the temperature sensor (11) is guided through the vacuum envelope (8) and the gap (9) to the protective barrier (5).

11. Cryogen supply system according to claim 10, further comprising a protective tube (12) in which the temperature sensor (11) is accommodated, wherein the protective tube (12) is guided through the vacuum envelope (8) and the gap (9) to the protective barrier (5).

12. Cryogen supply system according to claim 11, wherein the protective tube (12) is fluid-tightly connected to the vacuum envelope (8).

13. Cryogen supply system according to any of claims 1 - 12, wherein the heat conduction device (13) comprises a heat conduction element (35) for transferring heat (Q) from the process tube (4) to the protective barrier (5) or vice versa.

14. Cryogen supply system according to claim 13, wherein the heat conduction device (13) comprises a base element (14) which carries the heat conduction element (35), wherein the thermal conductivity of a material from which the heat conduction element (35) is made is greater than the thermal conductivity of a material from which the base element (14) is made.

15. Cryogen supply system according to claim 14, wherein the base element (14) has a bore (33) in which the heat conduction element (35) is accommodated, wherein an axis of symmetry (34) of the bore (33) is oriented perpendicularly to an axis of symmetry (15) of the heat conduction device (13).

## Revendications

1. Système d'alimentation en cryogène (1) pour l'alimentation d'un consommateur (2) en cryogène (H2), comportant un tube de traitement (4) à travers lequel le cryogène (H2) peut être guidé, une barrière de protection (5) dans laquelle le tube de traitement (4) est logé, un espace (6) prévu entre le tube de traitement (4) et la barrière de protection (5), un dispositif de conduction thermique (13) disposé dans l'espace (6) et conçu pour transférer de la chaleur (Q) du tube de traitement (4) à la barrière de protection (5) ou inversement, et un capteur de température (11) disposé à l'extérieur de la barrière de protection (5) et permettant de détecter une température du cryogène (H2), dans lequel le capteur de température (11) est couplé thermiquement au dispositif de conduction thermique (13).

2. Système d'alimentation en cryogène selon la revendication 1, dans lequel le dispositif de conduction thermique (13) est relié à force, par liaison de matière et/ou par complémentarité de forme au tube de traitement (4) et/ou à la barrière de protection (5).

3. Système d'alimentation en cryogène selon la revendication 1 ou 2, dans lequel le dispositif de conduction thermique (13) présente une fente (19) s'étendant le long d'une direction radiale (R) du dispositif de conduction thermique (13) et traversant complètement le dispositif de conduction thermique (13).

4. Système d'alimentation en cryogène selon l'une des revendications 1 à 3, dans lequel le dispositif de conduction thermique (13) est perméable aux fluides ou imperméable aux fluides.

5. Système d'alimentation en cryogène selon l'une des revendications 1 à 4, dans lequel le dispositif de conduction thermique (13) présente des évidements (22 - 29) qui sont réalisés comme des trous traversants ou des trous borgnes.

6. Système d'alimentation en cryogène selon la revendication 5, dans lequel les évidements (22 - 29) sont au moins partiellement remplis d'un matériau plastique.

7. Système d'alimentation en cryogène selon la revendication 5 ou 6, dans lequel les évidements (22 - 29) sont disposés à une distance inégale les uns des autres dans une direction périphérique (U) du dispositif de conduction thermique (13), de sorte qu'au moins une zone sans évidement (32) est prévue entre deux évidements (22, 29) voisins.

8. Système d'alimentation en cryogène selon l'une des revendications 1 à 7, dans lequel la fente (6) est remplie de gaz, en particulier d'hélium (He).

9. Système d'alimentation en cryogène selon l'une des revendications 1 à 8, comprenant en outre une enveloppe sous vide (8) dans laquelle est reçue la barrière de protection (5), et un espace (9) prévu entre la barrière de protection (5) et l'enveloppe sous vide (8).

10. Système d'alimentation en cryogène selon la revendication 9, dans lequel le capteur de température (11) est guidé à travers l'enveloppe sous vide (8) et l'espace (9) jusqu'à la barrière de protection (5).

11. Système d'alimentation en cryogène selon la revendication 10, comprenant en outre un tube de protection (12) dans lequel est reçu le capteur de température (11), dans lequel le tube de protection (12) est guidé à travers l'enveloppe sous vide (8) et l'espace (9) jusqu'à la barrière de protection (5).

12. Système d'alimentation en cryogène selon la revendication 11, dans lequel le tube de protection (12) est relié à l'enveloppe sous vide (8) de manière étanche aux fluides.

13. Système d'alimentation en cryogène selon l'une des revendications 1 à 12, dans lequel le dispositif de conduction thermique (13) présente un élément de conduction thermique (35) pour le transfert de chaleur (Q) du tube de traitement (4) à la barrière de protection (5) ou inversement.

14. Système d'alimentation en cryogène selon la revendication 13, dans lequel le dispositif de conduction thermique (13) présente un élément formant base (14) qui supporte l'élément de conduction thermique (35), dans lequel la conductivité thermique d'un matériau à partir duquel l'élément de conduction thermique (35) est fabriqué est supérieure à la conductivité thermique d'un matériau à partir duquel l'élément formant base (14) est fabriqué.

15. Système d'alimentation en cryogène selon la revendication 14, dans lequel l'élément formant base (14) présente un alésage (33) dans lequel est reçu l'élément de conduction thermique (35), dans lequel un axe de symétrie (34) de l'alésage (33) est orienté perpendiculairement à un axe de symétrie (15) du dispositif de conduction thermique (13).
